Europäisches Patentamt

(19) European Patent Office

Office européen des brevets

(11) Veröffentlichungsnummer: **0 258 173**
**B1**

(12) **EUROPÄISCHE PATENTSCHRIFT**

(45) Veröffentlichungstag der Patentschrift:
**24.01.90**

(21) Anmeldenummer: **87730094.7**

(22) Anmeldetag: **13.08.87**

(51) Int. Cl.⁴: **F16C 17/20, D21D 1/30**

(54) Elektrischer Motor zum Antrieb von Arbeitsmaschinen, insbesondere Refinern.

(30) Priorität: **20.08.86 DE 3628196**

(43) Veröffentlichungstag der Anmeldung:
**02.03.88 Patentblatt 88/9**

(45) Bekanntmachung des Hinweises auf die Patenterteilung:
**24.01.90 Patentblatt 90/4**

(84) Benannte Vertragsstaaten:
**AT DE SE**

(56) Entgegenhaltungen:
**CH-A- 604 414**
**DE-C- 860 651**
**GB-A- 2 099 923**

**PATENT ABSTRACTS OF JAPAN, Band 6,
Nr. 140 (E-121)[1018], 29. Juli 1982
PATENT ABSTRACTS OF JAPAN, Band 5,
Nr. 103 (E-64)[775], 3. Juli 1981
PATENT ABSTRACTS OF JAPAN, Band 10,
Nr. 319 (E-450)[2375], 30. Oktober 1986**

(73) Patentinhaber: **Siemens Aktiengesellschaft,
Wittelsbacherplatz 2, D-8000 München 2(DE)**

(72) Erfinder: **Hirmke, Werner, Dürerstrasse 37,
D-8501 Kalchreuth(DE)**
Erfinder: **Losensky, Erich, Hellmannring 55a,
D-1000 Berlin 13(DE)**

**Beschreibung**

Die Erfindung bezieht sich auf einen elektrischen Motor mit einem Gehäuse und Gleitlagern zur Lagerung der Läuferwelle zum Antrieb von Arbeitsmaschinen, insbesondere Refinern, bei dem die Läuferwelle im Bereich der Gleitlager keine Wellenschultern aufweist. Eine derartige Gestaltung der Läuferwelle ist notwendig, wenn betriebsmäßig oder zu Wartungszwecken eine größere axiale Verlagerung des Läufers stattfindet.

Refiner sind Holzzerkleinerungsmaschinen für die Papierherstellung, bei denen zwischen zwei Mahlscheiben Holzstücke zerfasert werden. Sie werden, wie z. B. aus der DE-A 2 510 852 oder DE-A 2 522 349 bekannt, von elektrischen Motoren angetrieben, wobei die Refinerscheibe an einem Ende der Läuferwelle angekuppelt bzw. befestigt ist. Da sich die zur Verkleinerung des Holzes dienenden Bearbeitungsvorrichtungen, z. B. Messer, des Refiners abnutzen und dann ausgewechselt werden müssen, muß die Lagerung des elektrischen Motors so ausgebildet sein, daß sie eine verhältnismäßig große axiale Verschiebung des Läufers im Stillstand zuläßt. Vor der Inbetriebnahme des Refiners ist es üblich, den elektrischen Motor zur Feststellung der Drehrichtung kurzzeitig ungekuppelt laufen zu lassen. Da derartige Motoren im allgemeinen eine Nutschräge aufweisen, besteht bei diesem ungekuppelten Lauf die Gefahr, daß sich der Läufer in unerwünschter Weise axial verlagert, da im Bereich der Gleitlager keine Wellenschultern vorhanden sind.

Der Erfindung liegt die Aufgabe zugrunde, einen elektrischen Motor zum Antrieb von Arbeitsmaschinen, insbesondere Refinern so auszubilden, daß in wenig aufwendiger Weise zwar bei Stillstand eine große axiale Verschiebbarkeit des Läufers gegeben ist, bei ungekuppeltem Lauf dagegen aber eine axiale Veralgerung nicht eintreten kann.

Zur Lösung dieser Aufgabe ist ein elektrischer Motor der eingangs beschriebenen Art gemäß der Erfindung so ausgebildet, daß das von der Arbeitsmaschine abgewandte Wellenende der Läuferwelle bzw. eine dort befindliche Nabe, die dieses Wellenende umgibt, mit Mitteln zur Zentrierung und Befestigung einer Läuferhaltevorrichtung versehen ist, die in von der Arbeismaschine abkuppeltem Zustand des Motors durch eine Öffnung in das Gehäuse einsetzbar ist, wobei dei Läuferhaltevorrichtung ein Wälzlager mit axialer Belastbarkeit aufweist, dessen Innenring gegenüber dem Wellenende und dessen Außenring gegenüber dem Gehäuse des Motors oder dem Gehäuse eines zum Motor gehörenden Teiles oder dessen Gleitlager festgelegt ist, daß die Öffnung in den vor dem Wellenende liegenden Gehäuseteilen angebracht ist und bei normalem, mit der Arbeitsmaschine gekuppeltem Betrieb des Motors mit einem Deckel verschlossen ist, und daß die Abmessungen der Läuferhaltevorrichtung so gewählt sind, daß die Läuferwelle zur Befestigung an dieser um eine bestimmte vorgegebene Strecke von der Arbeitsmaschine weg in Richtung auf das Wälzlager verlagert ist.

Wegen der fehlenden Wellenschultern im Bereich der Gleitlager des Motors kann die Läuferwelle bei Stillstand leicht verschoben werden. Deshalb ist eine besondere Läuferhaltevorrichtung vorgesehen, die infolge der besonderen Gestaltung des der Arbeitsmaschine abgewandten Wellenendes dort and diesem befestigbar ist. Diese Läuferhaltevorrichtung enthält ein Wälzlager mit axialer Belastbarkeit, dessen Außenring an den in der Nähe des Wellenendes befindlichen Gehäuseteilen festgelegt ist. Dieses Wälzlager gewährleistet kurzzeitig die axiale Führung der Läuferwelle, wenn die Läuferhaltevorrichtung an dem Wellenende befestigt ist. Durch die Bemessung der Läuferhaltevorrichtung ist außerschadlos ungekuppelt rotieren. Erst nach Entfernen der Läuferhaltevorrichtung kann die Läuferwelle wieder in die für den Betrieb geeignete Stellung gebracht werden.

Der Aufwand für eine derartige Läuferhaltevorrichtung ist sehr gering, da diese nur selten und auch nur kurzzeitig eingesetzt werden wird, wodurch das Wälzlager mit axialer Belastbarkeit der Läuferhaltevorrichtung höher als für Dauerbeanspruchung zulässig beansprucht werden kann.

Es empfiehlt sich, als Wälzlager mit axialer Belastbarkeit ein Rillenkugellager zu verwenden. Axialpendelrollenlager oder Schrägkugellager wären aber ebenso geeignet.

Handelt es sich bei dem Antriebsmotor der Arbeitsmaschine um einen Synchronmotor mit einer auf der von der Arbeitsmaschine abgewandten Seite der Läuferwelle angeordneten Erregermaschine mit rotierenden Gleichrichtern (RG-Erregermaschine), die von einem Gehäuse umgeben ist, vor dessen äußerem stirnseitigen Gehäuseschild die Luftführungshaube des Lüfters liegt, so empfiehlt es sich, daß der stirnseitige Gehäuseschild und die Stirnwand der Luftführungshaube jeweils eine zentrische, kreisförmige Öffnung enthalten, durch welche die Läuferhaltevorrichtung zur Befestigung an das Wellenende der Läuferwelle einbringbar ist.

Diese zur Montage der Läuferhaltevorrichtung erforderlichen Öffnungen werden für den normalen Betrieb der Anordnung in zweckmäßiger Weise durch Deckel verschlossen. Die Montage der Läuferhaltevorrichtung vereinfacht sich, wenn die Läuferhaltevorrichtung durch Abziehen des Wälzlagers von seiner Aufnahmefläche in zwei Teile zerlegbar ist und wenn der Durchmesser der Öffnung in der Luftführungshaube größer als der der Öffnung im Gehäuseschild ist, an dem der Tragring für den Außenring des Wälzlagers befestigbar ist.

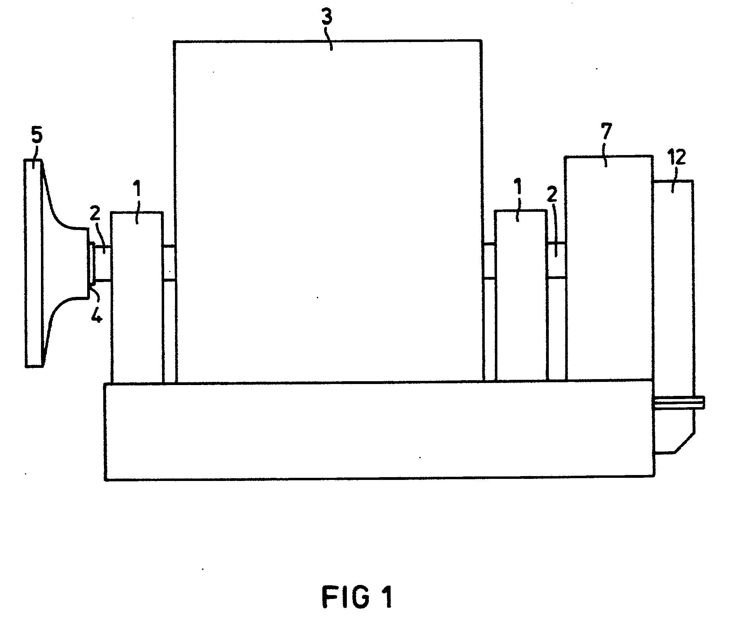

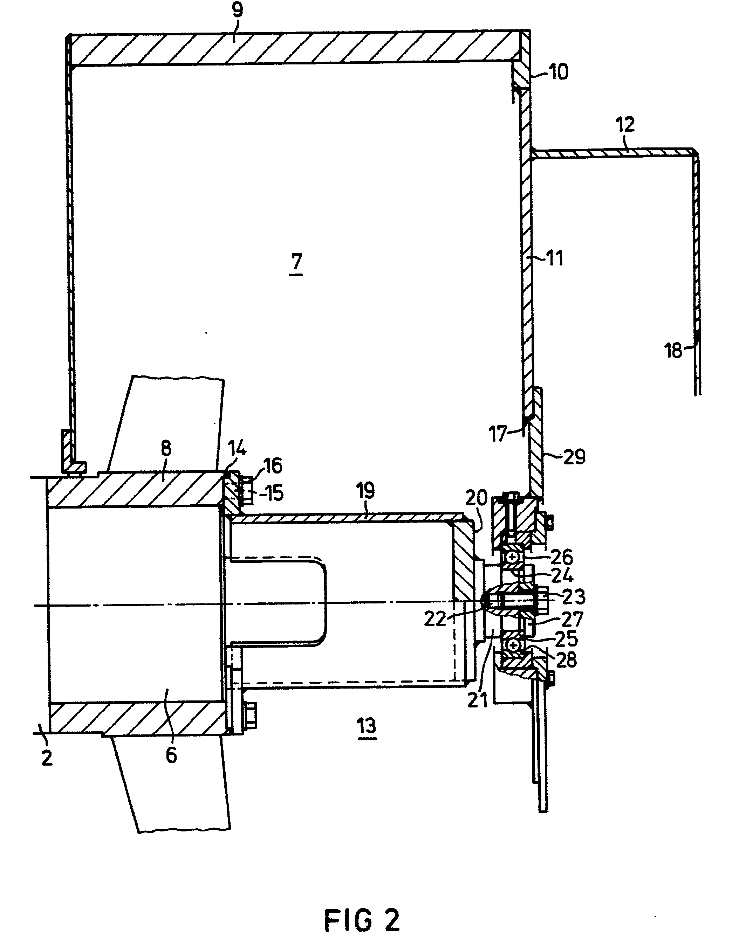

Im folgenden sei die Erfindung noch anhand des in den Figuren 1 und 2 der Zeichnung dargestellten Ausführungsbeispiels näher erläutert. Fig. 1 zeigt schematisch eine von einem Synchronmotor mit Gleitlagern und einer RG-Erregermaschine angetriebene Refinerscheibe. Fig. 2 zeigt teilweise geschnitten die an dem Wellenende auf der Seite der RG-Erregermaschine angebrachte Läuferhaltevorrichtung.

Die in Gleitlagern 1 gelagerte Läuferwelle 2 eines elektrischen Motors 3 synchroner Bauart trägt an dem einen Wellenende 4 eine Refinerscheibe 5. An dem anderen Wellenende 6 ist die RG-Erregermaschine 7 angeordnet, deren Läufernabe das Wellenende 6 umgibt. Das Gehäuse 9 der RG-Erregermaschine 7 ist auf der dem Wellenende 6 abgewandten Stirnseite 10 durch den Gehäuseschild 11 verschlossen. Vor diesem liegt außerdem noch die Luftführungshaube 12 des zur Kühlung der RG-Erregermaschine 7 dienenden, nicht dargestellten Lüfters.

Die Läuferwelle 2 des Synchronmotors 3 ist im Bereich der Gleitlager 1 ohne Wellenschulter ausgebildet, damit eine große axiale Verschiebbarkeit der Läuferwelle 2 im Stillstand gegeben ist. Eine derartige Verschiebung wird notwendig, wenn die an der Refinerscheibe 5 angeordneten Messer ausgewechselt werden müssen. Vor der Inbetriebnahme des Refiners oder zu späteren Kontrollzwecken muß der Synchronmotor 3 kurzzeitig ungekuppelt laufen, z. B. um seine Drehrichtung festzustellen. Da infolge der fehlenden Wellenschultern im ungekuppelten Zustand des Läufers keine axiale Führung gegeben ist, könnte sich durch die Ständernutschrägung und durch eventuelle magnetische Unsymmetrieen der Läufer bei diesem ungekuppelten Lauf axial verlagern, was durch eine Läuferhaltevorrichtung 13 verhindert wird, die vor Beginn des ungekuppelten Laufes an dem Wellenende 6 des Synchronmotors 3 befestigt wird und den Läufer in axialer Richtung festlegt.

Zu diesem Zweck ist die Läufernabe 8 der RG-Erregermaschine 7 mit einem Zentrierring 14 versehen und auch mit axial gerichteten Bohrungen 15 für Befestigungsschrauben 16. Der stirnseitige Gehäuseschild 11 weist eine zur Läuferwelle 2 zentrische kreisförmige Öffnung 17 auf, und die Luftführungshaube 12 hat eine entsprechende zentrische kreisförmige Öffnung 18. Der Durchmesser der Öffnung 18 in der Luftführungshaube 12 ist größer als der Durchmesser der Öffnung 17 im Gehäuseschild 11. Während des normalen Betriebes des Refiners sind die Öffnungen 17 und 18 durch Deckel verschlossen.

Die Läuferhaltevorrichtung 13 weist einen Glockenkörper 19 auf, der mittels eines flanschartigen Randes in dem Zentrierring 14 einpaßbar ist und mit den Befestigungsschrauben 16 an der Läufernabe 8 der RG-Erregermaschine angeschraubt wird. Auf seiner Stirnwand 20 trägt der Glockenkörper 19 einen zentrischen Zapfen mit einer zentralen Bohrung 22 für eine Halteschraube 23. Der zentrische Zapfen 21 hat außerdem eine Aufnahmefläche 24 für den Innenring 25 eines Wälzlagers 26 mit axialer Belastbarkeit, das auf den Zapfen 21 aufschiebbar ist. Wenn das Wälzlager 26 auf dem Zapfen 21 aufgeschoben ist, wird der Innenring 25 von einer Haltescheibe 27 und der Halteschraube 23 festgelegt.

Der Außenring 28 des Wälzlagers 26 mit axialer Belastbarkeit ist in einem Tragring 29 befestigt, der seinerseits an der Öffnung 17 des Gehäuseschildes 11 zentrierbar und an dem Gehäuseschild 11 befestigbar ist. Das Wälzlager 26 ist somit sowohl gegenüber dem Wellenende 6 als auch gegenüber dem Gehäuseschild 11 festgelegt. Dabei ist aber die Länge des Glockenkörpers 19 so gewählt, daß diese Festlegung des Wälzlagers 26 nur möglich ist, wenn zuvor die Läuferwelle 2 von der Refinerscheibe 5 weg um eine vorher bestimmte Strecke verschoben wurde. Dadurch kann dann die Läuferwelle schadlos ungekuppelt rotieren.

Nach dem Entkuppeln des Synchronmotors 3 wird die Läuferhaltevorrichtung 13 wie folgt montiert:

Zunächst wird der während des Betriebes in der Luftführungshaube 12 befindliche Deckel, der deren Öffnung 18 verschließt, entfernt. Danach entfernt man ebenfalls den im Gehäuseschild 11 befindlichen Deckel zum Verschluß der Öffnung 17. Vor der Befestigung der Läuferhaltevorrichtung 13 an der RG-Erregermaschine 7 bzw. der Läuferwelle 2 wird die Läuferhaltevorrichtung 13 in zwei Hauptteile zerlegt. Dazu werden die zentral angeordnete Halteschraube 23 und die Haltescheibe 27 entfernt. Danach wird das Wälzlager 26 mit seinem Tragring 29 von dem Zapfen 21 des Glockenkörpers 19 abgezogen. Dieser Glockenkörper 19 wird nun in den Zentrierring 14 eingepaßt und mit den Befestigungsschrauben 16 in die Bohrungen 15 eingeschraubt und somit an der Läufernabe 8 der RG-Erregermaschine 7 befestigt. Dann wird die Läuferwelle 2 in Richtung auf den Gehäuseschild 11 der RG-Erregermaschine 7 soweit verschoben, bis das Wälzlager 26 auf seiner Aufnahmefläche 24 am Zapfen 21 aufgeschoben und dort durch die Halteschraube 23 und die Haltescheibe 27 festgelegt werden kann, wobei der Tragring 29 sich im Gehäuseschild 11 zentriert und ebenfalls an diesem befestigt wird. Durch diese Verschiebung ist sichergestellt, daß ein Lastbetrieb des Refiners bei angebrachter Läuferhaltevorrichtung 13 nicht möglich ist. Mit der so montierten Läuferhaltevorrichtung 13 kann der Synchronmotor 3 kurzzeitig ungekuppelt laufen, wobei ihm das Wälzlager 26 mit axialer Belastbarkeit als axiales Führungslager dient.

Nach Betätigung der Drehrichtung, bzw. Abschluß des Kontrollaufes des Synchronmotors 3 wird dieser wieder angehalten, und zur Demontage der Läuferhaltevorrichtung 13 wird in umgekehrter Reihenfolge vorgegangen. Die Läuferwelle 2 ist dabei wieder in ihre Ausgangsstellung zu bringen. Die Öffnungen 17 im Gehäuseschild 11 der RG-Erregermaschine 7 und 18 in der Luftführungshaube 12 werden durch Deckel verschlossen, und nach dem Kuppeln kann der Refiner wieder in Betrieb genommen werden.

**Patentansprüche**

1. Elektrischer Motor (3) mit einem Gehäuse und Gleitlagern (1) zur Lagerung der Läuferwelle (2) zum Antrieb von Arbeitsmaschinen, insbesondere Refinern, bei dem die Läuferwelle (2) im Bereich der Gleitlager (1) keine Wellenschultern aufweist, **dadurch gekennzeichnet,** daß das von der Arbeitsmaschine (5) abgewandte Wellenende (6) der Läuferwelle (2) bzw. eine dort befindliche Nabe (8), die dieses Wellenende (6) umgibt, mit Mitteln zur Zentrierung und Befestigung einer Läuferhaltevorrichtung (13) versehen ist, die in von der Arbeitsmaschine abgekuppeltem Zustand des Motors (3) durch eine Öffnung (17, 18) in das Gehäuse (9) einsetzbar ist, wobei die Läuferhaltevorrichtung ein Wälzlager (26) mit axialer Belastbarkeit aufweist, dessen Innenring (25) gegenüber dem Wellenende (6) und dessen Außenring (28) gegenüber dem Gehäuse (9) des Motors oder dem Gehäuse (11) eines zum Motor gehörenden Teiles oder dessen Gleitlager (1) festgelegt ist, daß die Öffung (17, 18) in den vor dem Wellenende (6) liegenden Gehäuseteilen (11, 12) angebracht ist und bei normalem, mit der Arbeitsmaschine gekuppeltem Betrieb des Motors (3) mit einem Deckel verschlossen ist, und daß die Abmessungen der Läufervorrichtung (13) so gewählt sind, daß die Läuferwelle (2) zur Befestigung an dieser um eine bestimmte vorgegebene Strecke von der Arbeitsmaschine weg in Richtung auf das Wälzlager (26) verlagert ist.

2. Elektrischer Motor mit Läuferhaltevorrichtung nach Anspruch 1, **dadurch gekennzeichnet**, daß das Wälzlager (26) mit axialer Belastbarkeit der Läuferhaltevorrichtung (13) ein Rillenkugellager ist.

3. Elektrischer Motor mit Läuferhaltevorrichtung nach Anspruch 1 oder 2 in synchroner Bauart und einer auf der vom Refiner abgewandten Seite der Läuferwelle angeordneten Erregermaschine mit rotierenden Gleichrichtern (RG-Erregermaschine), die von einem Gehäuse umgeben ist, vor dessen äußerem stirnseitigen Gehäuseschild die Luftführungshaube des Lüfters liegt, **dadurch gekennzeichnet**, daß der stirnseitige Gehäuseschild (11) und die Stirnwand der Luftführungshaube (12) jeweils eine zentrische, kreisförmige Öffnung (17, 18) enthalten, durch welche die Läuferhaltevorrichtung (13) zur Befestigung an das Wellenende (6) der Läuferwelle (2) einbringbar ist und daß die Öffnungen (17, 18) durch Deckel verschließbar sind.

4. Elektrischer Motor mit Läuferhaltevorrichtung nach Anspruch 1 oder 2 oder 3, **dadurch gekennzeichnet**, daß die Läuferhaltevorrichtung einen Glockenkörper (19) aufweist, dessen Stirnwand (20) einen zentrischen Zapfen (21) trägt mit einer Aufnahmefläche (24) für den Innenring (25) des Wälzlagers (26), das auf den Zapfen (21) aufschiebbar ist und dessen Außenring (28) in einem Tragring (29) befestigt ist, der am Gehäuse (11) zentrisch befestigbar ist.

5. Elektrischer Motor mit Läuferhaltevorrichtung nach Anspruch 4, **dadurch gekennzeichnet**, daß die axiale Länge des Glockenkörpers so bemessen ist, daß sich die Läuferwelle (2) um eine bestimmte vorgegebene Strecke verlagert, wenn das Wälzlager (26) auf den Zapfen (21) aufgeschoben, dort festgelegt und der Tragring (29) am Gehäuse (11) befestigt ist.

6. Elektrischer Motor mit Läuferhaltevorrichtung nach Anspruch 1 oder 4, **dadurch gekennzeichnet**, daß das von der Arbeitsmaschine (5) abgewandte Wellenende (6) der Läuferwelle (2) bzw. die dieses umgebende Nabe (8) auf der Stirnseite mit einem Zentrierring (14) und axial gerichteten Bohrungen (15) für Befestigungsschrauben (16) versehen ist und daß die Läuferhaltevorrichtung (13) in den Zentrierring (14) anpaßbar und in den Bohrungen (15) befestigbar ist.

**Claims**

1. Electric motor (3) having a housing and sliding bearings (1) for the purpose of mounting the rotor shaft (2) for the drive of processing machines, more particularly refiners, in which the rotor shaft (2) has no shaft shoulders in the region of the sliding bearings (1), charaterised in that the shaft end (6) of the rotor shaft (2), remote from the processing machine (5), or a hub (8), which is located there and which surrounds this shaft end (6), is provided with means for centering and securing a rotor holding arrangement (13) which can be iserted into the housing (9) through an opening (17, 18) when the motor (3) is in the decoupled state from the processing machine, the rotor holding arrangement having a roller bearing (26) with axial loading capacity, the inner ring (25) of which is fixed in relation to the shaft end (6) and the outer ring (28) of which is fixed in relation to the housing (9) of the motor or the housing (11) of a portion beloning to the motor or the latter's sliding bearing (1), in that the operning (17, 18) is provided in the housing portions (11, 12), which lie in front of the shaft end (6), and is closed with a lid in the case of normal operation, coupled with the processing machine, of the motor (3) and in that the dimensions of the rotor arrangement (13) are chose so that the rotor shaft (2), for the purpose of securement to the latter, is displaced by a certain given distance away from the processing machine in the direction of the roller bearing (26).

2. Electric motor having rotor holding arrangement according to claim 1, characterised in that the roller bearing (26), with axial loading capacity of the rotor holding arrangement (13), is a deep groove ball bearing.

3. Electric motor having rotor holding arrangement according to claim 1 or 2 of synchronous type and an exciter with rotating rectifiers (rotating – rectifier exciter) which is arranged on the side of the rotor shaft remote from the refiner and is surrounded by a housing, in front of the outer end housing shield of which lies the air guide hood of the fan, characterised in that the end housing shield (11) and the end wall of the air guide hood (12) each contain a central circular opening (17, 18) through which the rotor holding arrangement (13) can be introduced for the purpose of securement to the shaft end (6) of the rotor shaft (2) and in that the openings (17, 18) can be closed by means of lids.

4. Electric motor having rotor holding arrangement according to claim 1 or 2 or 3, characterised in that the rotor holding arrangement has a bell-shaped body (19), the end wall (20) of which bears a central peg (21) with a receiving surface (24) for the inner ring (25) of the roller bearing (26) which can be slipped onto the peg (21) and the outer ring (28) of which is secured in a retaining ring (29) which can be secured centrically to the housing (11).

5. Electric motor having rotor holding arrangement according to claim 4, characterised in that the axial length of the bell-shaped body is dimensioned so that the rotor shaft (2) is displaced by a certain given distance when the roller bearing (26) is slipped onto the peg (21) and fixed there and the retaining ring (29) is secured to the housing (11).

6. Electric motor having rotor holding arrangement according to claim 1 or 4, characterised in that the shaft end (6) of the rotor shaft (2) remote from the processing machine (5) or the hub (8) surrounding the latter is provided on the end side with a centering ring (14) and axially directed bore holes (15) for securement screws (16) and in that the rotor holding arrangement (13) can be fitted into the centering ring (14) and can be secured in the bore holes (15).

**Revendications**

1. Moteur électrique (3) avec un carter et des paliers lisses (1) pour supporter l'arbre du rotor (2) en vue de l'entraînement de machines industrielles, en particulier de raffineurs, dans lequel l'arbre du rotor (2) ne présente pas d'épaulements d'arbre, dans la zone des paliers lisses (1), caractérisé par le fait que l'extrémité (6) de l'arbre du rotor (2), qui est éloignée de la machine, ou un moyeu (8) qui s'y trouve et qui entoure ladite extrémité (6) de l'arbre du rotor, est pourvue de moyens pour centrer et fixer un dispositif de support du rotor (13) qui est susceptible, lorsque le moteur (3) est dans son état désaccouplé de la machine, d'être introduit à travers une ouverture (17, 18) dans le carter (9), le dispositif de support du rotor comportant un palier à roulement (26) capable d'être chargé axialement, dont la bague intérieure (25) est fixée par rapport à l'extrémité d'arbre (6) et dont la bague extérieure (28) est fixée par rapport du carter (9) du moteur, ou par rapport à l'enveloppe (11) d'une partie appartenant au moteur ou par rapport au palier lisse (1) de celui-ci, que l'ouverture (17, 18) est ménagée dans les parties (11, 12) du carter est obturée par un couvercle lors du fonctionnement normal du moteur (3) accouplé à la machine et que les dimensions du dispositif de support (13, du rotor sont choisies de telle manière que l'arbre du rotor (2), pour la fixation à ce dispositif de support, est déplacé, d'une quantité prédéterminée, depuis la machine en direction du palier à roulement (26).

2. Moteur électrique à dispositif de support du rotor selon la revendication 1, caractérisé par le fait que le palier à roulement (26) à capacité de charge axiale du dispositif de support du rotor (13) est un roulement à billes du type à gorge de roulement.

3. Moteur électrique à dispositif de support pour le rotor, selon la revendication 1 ou 2, du genre de construction synchrone et avec une excitatrice à redresseurs en rotation (excitatrice RG), montée sur le côté de l'arbre du rotor qui est éloigné du raffineur et qui est entourée par une enveloppe en avant du bouclier frontal extérieur de laquelle est prévu le capot de guidage de l'air d'un ventilateur, caractérisé par le fait que le bouclier frontal (11) de l'enveloppe et la paroi frontale du capot de guidage de l'air (12) comportent chacun une ouverture circulaire et centrale (17, 18) à travers lesquelles est susceptible d'être introduit le dispositif de support du rotor (13) pour sa fixation à l'extrémité (6) de l'arbre du rotor (2), et que les ouvertures (17, 18) sont susceptibles d'être obturées par des couvercles.

4. Moteur électrique à dispositif de support pour le rotor, selon la revendication 1 ou 2 ou 3, caractérisé par le fait que le dispositif de support pour le rotor comporte un élément en forme de cloche (9) dont la paroi frontale (20) porte un appendice central (21) à surface de réception (24) pour la bague de roulement intérieure (25) du palier à roulement (26), qui est susceptible d'être glissée sur l'appendice (21) et dont la bague de roulement extérieure (28) est fixée dans une bague de support (29) qui est susceptible d'être fixée en position centrée à l'enveloppe.

5. Moteur électrique à dispositif de support pour le rotor, selon la revendication 4, caractérisé par le fait que la longueur axiale de l'élément en forme de cloche possède une dimension telle que l'arbre du rotor (12) se déplace d'une quantité prédéterminée lorsque le palier à roulement (26) est glissé sur l'appendice (21), y est fixé et que la bague de support (29) est fixée à l'enveloppe (11).

6. Moteur électrique à dispositif de support pour le rotor, selon la revendication 1 ou 4, caractérisé par le fait que l'extrémité (6) de l'arbre du rotor (2), qui est éloignée de la machine industrielle (5), ou le moyeu (8) qui entoure cette extrémité, est pourvue sur le côté frontal d'une bague de centrage (14) et de perçages axiaux pour des vis de fixation (16), et que le dispositif de support (13) pour le rotor est susceptible de s'adapter dans la bague de centrage et d'être fixé dans les perçages (15).

FIG 1

FIG 2